(19) Europäisches Patentamt
European Patent Office
Office européen des brevets

(11) **EP 4 617 880 A1**

(12) **EUROPEAN PATENT APPLICATION**

(43) Date of publication:
**17.09.2025 Bulletin 2025/38**

(21) Application number: **24163671.1**

(22) Date of filing: **14.03.2024**

(51) International Patent Classification (IPC):
**G06F 11/30** (2006.01)      **G06N 3/09** (2023.01)
**H04L 41/06** (2022.01)      **H04L 41/16** (2022.01)

(52) Cooperative Patent Classification (CPC):
**H04L 41/16; G06F 11/0709; G06F 11/0751;**
**G06N 3/045; G06N 3/09;** H04L 41/0631;
H04L 43/10

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(71) Applicant: **British Telecommunications public**
**limited company**
**London E1 8EE (GB)**

(72) Inventor: **The designation of the inventor has not**
**yet been filed**

(74) Representative: **British Telecommunications**
**public limited company**
**Intellectual Property Department**
**9th Floor**
**One Braham**
**Braham Street**
**London E1 8EE (GB)**

(54) **ANOMALY DETECTION FOR COMMUNICATIONS NETWORKS**

(57)      Some examples of training a large language model (LLM) to detect an anomaly comprise receiving a plurality of modalities of training data, each modality of training data comprising a different data type. The training data comprises labels indicating a presence of an anomaly. Each modality of training data is transformed with a respective transformation to obtain respective vector embeddings. The respective vector embeddings of the training data are input into a pre-trained LLM. Weights of the pre-trained LLM are fine-tuned using the training data via supervised learning such that the pre-trained LLM is able to detect anomalies in multi-modal data.

FIG. 1

EP 4 617 880 A1

**Description**

The present disclosure relates to anomaly detection. In particular, the present disclosure relates to anomaly detection for use in communication networks.

BACKGROUND

In anomaly detection, modelling methods focussed on time-series are often employed to describe performance of a system such as a communications network, manufacturing plant or other apparatus. Such modelling methods often look for anomalies and changes in a series of readings from network devices or aggregate statistics. Whilst current modelling methods are able to detect anomalies, they are unable to efficiently incorporate information about why an anomaly occurs and thus how to remedy an anomaly.

The examples described herein are not limited to examples which solve problems mentioned in this background section.

SUMMARY

Examples of preferred aspects and embodiments of the invention are as set out in the accompanying independent and dependent claims.

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

In a first aspect of the disclosed technology, there is a computer-implemented method for training a large language model (LLM) to detect an anomaly, the method comprising:

receiving a plurality of modalities of training data, each modality of training data comprising a different data type, wherein the training data comprises labels indicating a presence of an anomaly;
transforming each modality of training data with a respective transformation to obtain respective vector embeddings;
inputting the respective vector embeddings of the training data into a pre-trained LLM; and
fine-tuning weights of the LLM using the training data via supervised learning such that the LLM is able to detect anomalies in multi modal data.

By retraining a pre-trained LLM to be a multi-modal LLM, a more granular and informative view of a system which incorporates high-dimensional and high-diversity data types is achieved. Moreover, by using a multi-modal LLM to detect an anomaly, the complexity and dimensions of inputs are condensed, enabling a faster time to resolve anomalies and process and use diverse information.

In some preferred example embodiments, the anomaly comprises a fault in a communications network.

Communications networks have a very complex structure, with many interrelated entities interacting with the communication network at any given point in time. Anomalies in a communication network can therefore have significant effects on users of the network. By using multi-modal LLMs to detect anomalies in a communications network, the source of the anomaly is identified as quickly as possible because the multi-modal LLM is able to consider multiple modalities of data, each of which could lead to an anomaly.

In some preferred example embodiments, at least one of the plurality of modalities of input data comprise telemetry data of a communications network.

In some preferred example embodiments, at least one of the plurality of modalities of input data comprises image data.

Large language models typically process textual inputs. By transforming multi-dimensional data, such as images, to obtain vector embeddings, the pre-trained LLM is able to process multi-dimensional data, widening the anomaly detection capabilities of the LLM.

In some preferred example embodiments, the image data is transformed into a vector embedding using a convolutional neural network (CNN).

In some preferred example embodiments, an objective function of the supervised learning comprises an accuracy objective for detecting the anomaly.

In some preferred embodiments, the method comprises using the fine-tuned LLM to detect an anomaly by receiving telemetry data from a communications network, transforming the input data into a vector embedding and processing the vector embedding using the fine-tuned LLM to obtain a classification of the input data, and in response to the classification indicating an anomaly, triggering instructions to do one or more of: automatically manage the communications network, automatically isolate a node of the communications network, automatically provision a node in the communications network, automatically provision a communications link of the communications network.

By using a multi-modal LLM to detect anomalies in a communications network, anomalies are more efficiently and more rapidly detected. The detected anomalies are then used to trigger an action which resolves the anomaly, thereby increasing the robustness of the communications network.

Another aspect of the disclosed technology comprises a computer-implemented method, the method comprising:

receiving a plurality of modalities of input data, each modality of input data comprising a different data type;
transforming each modality of input data with a respective transformation to obtain respective vector embeddings for the input data;
inputting the respective vector embeddings into a large language model (LLM) trained to detect an anomaly from a plurality of modalities of data;
determining, using the trained LLM, whether an anomaly has occurred; and
in response to determining that an anomaly has occurred, providing an indication that an anomaly has occurred.

By using a multi-modal LLM, a more granular and informative view of a system which incorporates high-dimensional and high-diversity data types is achieved. Moreover, by using the multi-modal LLM to detect an anomaly, the complexity and dimensions of inputs are condensed, enabling a faster time to resolve anomalies and process and use diverse information.

In some preferred example embodiments, the anomaly comprises a fault in a communications network.

By using multi-modal LLMs to detect anomalies in a communications network, the source of the anomaly is identified as quickly as possible because the multi-modal LLM is able to consider multiple modalities of data, each of which could lead to an anomaly. This is especially important in communication networks where the system is complex and where single anomalies may have significant repercussions on the rest of the system.

In some preferred example embodiments, one of the plurality of modalities of input data comprises network telemetry data.

In some preferred example embodiments, the indication that an anomaly has occurred comprises human-readable textual explanation and/or reasoning.

Providing an indication of the anomaly in a human-readable output, such as with a textual explanation and/or reasoning, advantageously enables the source of the anomaly to be readily interpreted by humans so that the anomaly may be understood and interpreted.

In some preferred example embodiments, at least one of the plurality of modalities of input data is received from a sensor associated with a communications network.

Using sensors to obtain at least some of the input data for the multi-modal LLM enables the multi-modal LLM to monitor various aspects of a communication network to determine anomalies or indications of an increased risk that an anomaly will occur in real-time. Monitoring both network data and external data (e.g. news and events information) in real-time leads to anomalies being anticipated and/or detected at a must faster rate than where single modality models are used.

In some preferred example embodiments, the method comprises in response to determining that an anomaly has occurred, providing a suggested action to resolve the anomaly.

Another aspect of the disclosed technology comprises an apparatus, the apparatus comprising:

one or more processors; and
a memory that stores one or more programs configured to perform a method according to embodiments described herein.

In some preferred embodiments, the apparatus comprises a sensor, wherein at least one of the plurality of modalities of input data comprises sensor data from the sensor.

It will also be apparent to anyone of ordinary skill in the art, that some of the preferred features indicated above as preferable in the context of one of the aspects of the disclosed technology indicated may replace one or more preferred features of other ones of the preferred aspects of the disclosed technology. Such apparent combinations are not explicitly listed above under each such possible additional aspect for the sake of conciseness.

Other examples will become apparent from the following detailed description, which, when taken in conjunction with the drawings, illustrate by way of example the principles of the disclosed technology.

BRIEF DESCRIPTION OF THE DRAWINGS

FIG. 1 illustrates schematically an exemplary overview of an apparatus for anomaly detection;
FIG. 2 illustrates an exemplary method of training a large language model;
FIG. 3 illustrates a schematic overview of training of a large language model;
FIG. 4 illustrates an exemplary method of using a large language model for anomaly detection;
FIG. 5 illustrates a schematic overview of using a large language model for anomaly detection;
FIG. 6 is a schematic diagram showing an operating environment.

The accompanying drawings illustrate various examples. The skilled person will appreciate that the illustrated element boundaries (e.g., boxes, groups of boxes, or other shapes) in the drawings represent one example of the boundaries. It may be that in some examples, one element may be designed as multiple elements or that multiple elements may be designed as one element. Common reference numerals are used throughout the figures, where appropriate, to indicate similar features.

DETAILED DESCRIPTION

The following description is made for the purpose of illustrating the general principles of the present technology and is not meant to limit the inventive concepts claimed herein. As will be apparent to anyone of ordinary skill in the art, one or more or all of the particular features described herein in the context of one embodiment are also present in some other embodiment(s) and/or can be used in combination with other described features in various possible combinations and permutations in some other embodiment(s).

Owing to the complex structures of communication networks, the detection of anomalies is not always straightforward. Typically, diagnostics tools which use modelling methods focus on time-series data to detect anomalies and changes in a series of readings from network devices or aggregate statistics, such as a number of users in an area.

However, such modelling methods are often focussed on a single time series and cannot incorporate information about different data types or reasoning as to why changes or anomalies are occurring. Known methods of anomaly detection typically only look at a single modality of data to determine whether a system, such as a communication network, is acting anonymously. As used herein, a modality of data comprises a data type such that a plurality of modalities of input data comprises a plurality different types of input data (e.g., image data, telemetry data, network topology, audio signals, external information such as weather, events and news information etc.). As known anomaly detection systems will only look at a single modality of data to perform a very specific task, they are not able to detect anomalies in more generalised systems, especially where an anomaly occurs as a result of multiple events.

Aspects of the disclosed technology are based on using transfer learning to train a large language model (LLM) to detect an anomaly using multiple modalities of training data. As used herein, detecting an anomaly comprises detecting that a faulting condition has already occurred or is likely to occur. Applying techniques from multi-modal LLMs to problems in network diagnostics enables a more granular and informative view of the network which incorporates high-dimensional and high-diversity data types. Human-readable textual explanations and reasoning from text and other forms of input data are provided by the disclosed technology.

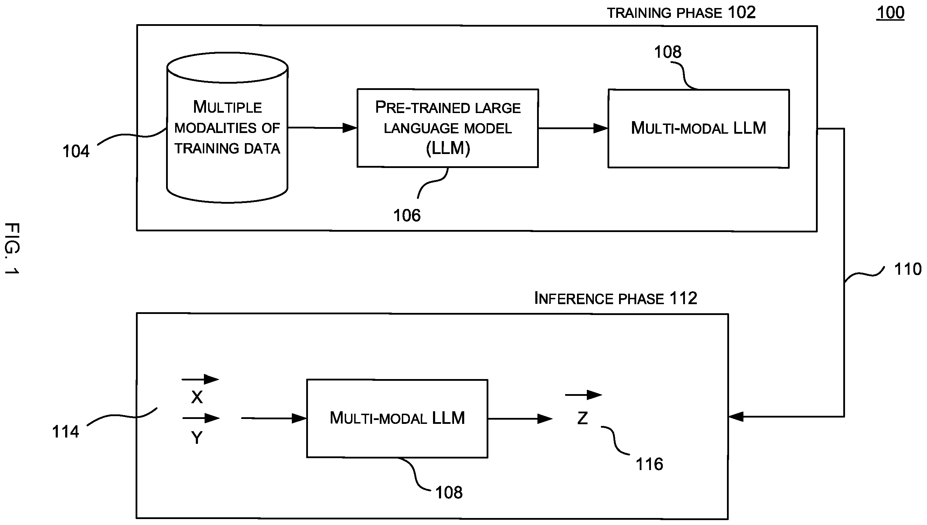

FIG. 1 of the accompanying drawings shows a system 100 in which various embodiments of the present applications may be practised. In the exemplary system 100, there is depicted a training phase 102 and an inference phase 112. The training phase 102 is shown to be linked to the inference phase 112 by arrow 110. In the training phase 102, multiple modalities of training data are input into a pre-trained large language model (LLM) 106. A pre-trained large language model is a machine learning model that has over one billion parameters and which is able to generate text. The large language model is said to be pre-trained because it has been trained using vast quantities of sequences of text and may subsequently be fine-tuned for a particular task. Any suitable labelled training data which is relevant to an anomaly which occurs in a system is used. Any suitable training is used, such as supervised or semi-supervised training. In an example the training is achieved using a backpropagation process such as the Adam process or other well-known backpropagation process. In another example, parameter efficient fine-tuning (PEFT) is used.

The training data which is used to train the LLM 106 may be a time series, i.e. data relating to something which changes over time, or may be static. Where the data relates to a slowly changing variable, such as an inventory, the rate of change of the data is very low and may be regarded as a constant. As used herein, a time series may relate to continuous data which is captured, a variable which is observed at various intervals of time or a portion or all of the previous records of the variable.

The LLM 106 used may take different forms, such as generic or raw language models such as GPT 3, GPT 4, instruction-tuned language models, dialog-tuned language models such as ChatGPT and the like. Following the transfer learning, or fine-tuning of the pre-trained LLM 106 to be a multi-modal LLM 108 for anomaly detection, the trained multi-modal LLM 108 may be used in the inference phase 112. In the inference phase, multiple modalities of input data 114 is input into the multi-modal LLM 108 and an output 116, which may be single modal or multi-modal, is output from the LLM. The output 116 is indicative of an anomaly which is detected by the multi-modal LLM 108.

In an example, during the inference phase the multi-modal LLM 108 receives an image of a level of utilisation of a link in a communications network, such as an image of a network configuration of the communication network or graphs of statistics, and a text file comprising telemetry data in numerical and character form. The image and the text file both contain information about a particular communications network during a given time period. The multi-modal LLM is able to use both these inputs to compute a prediction as to whether an anomaly is present or not in the communications network.

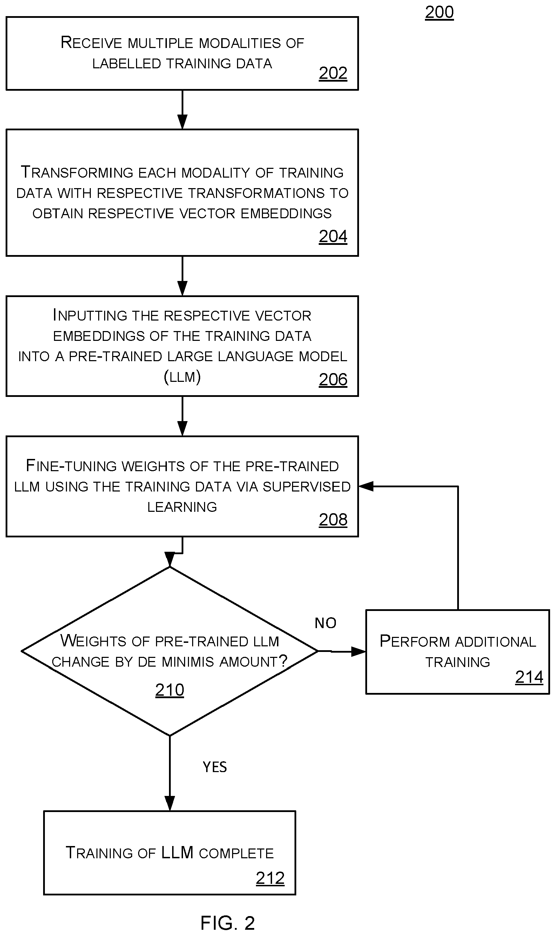

FIG. 2 is an exemplary method 200 of retraining (also referred to as fine-tuning) a pre-trained LLM to perform anomaly detection. Multiple modalities of training data are received 202. In a communications network, the multiple modalities of training data may be received at one or more existing databases or systems of the communications network. The multiple modalities of training data may be received by sensors, probes, monitors etc. that already exist in the network. Each data item in the multiple modalities of training data is labelled with information regarding whether or not the data item is indicative of an anomaly. The labels may additionally or alternatively comprise information regarding what the fault was for the respective data item. The labels may additionally or alternatively comprise information regarding what action overcame a given faulting condition (e.g. how the anomaly was resolved). As another example, the labels comprise human-readable information such that the multi-modal LLM may output human-readable outputs. The received training data is transformed 204 to obtain vector embeddings for the training data which are able to be processed by the LLM. Vector embeddings represent a list of numbers which are processable by an LLM. A respective transformation for each modality of training data is used to transform the respective modalities of training data to obtain the vector embeddings. For example, where the training data is an image, a convolutional neural network may be used to transform the image data into a vector embedding. As another example, where the training data comprises numerical data, the data is not transformed. Where numerical data is transformed, the numerical data may be scaled or transformed in a more complex way. As yet another example, where audio data is to be used as training data, the audio data is converted to text using an existing model or service that provides audio to text transcription and is then transformed from text into vector embeddings, for example using Word2Vec. Alternatively, the audio training data is directly converted into vector embeddings, for example, using Speech2Vec. The obtained vector embeddings of the training data are input 206 into a pre-trained LLM. In an example, the vector embeddings are presented to the pre-trained LLM as vector embedding, label pairs. If the labels are numeric, no further transformation may be performed on the labels to obtain vector embeddings. If the labels comprise textual information (e.g. it takes the form of a text string), the label is transformed in the same way as a textual input data would be transformed.

Using the labels of the training data, weights of the pre-trained LLM are fine-tuned 208 using supervised or semi-supervised learning. Once the weights change by only a de minimis amount, fine-tuning of the pre-trained LLM is complete 212. If the weights continue to change 210, additional training is performed 214. For example, additional training may comprise providing the LLM with additional training data for each of the modalities or may comprise providing the LLM with additional modalities of training data. Additionally or alternatively, additional training may comprise adjusting or changing the criterion for deciding when training is complete. For example, a threshold for training being completed may be decreased. As another example, a different criterion may be used.

The objective function and associated criteria for fine-tuning the pre-trained LLM are chosen based on the class or type of anomaly to be detected. For example, if the LLM is being trained to perform binary classification (i.e. whether there is or is not an anomaly), a criteria by which the objective function is optimised may be accuracy. That is, how accurate is the model in capturing both the positive and negative cases of anomaly detection. If, during training of the LLM, it is observed that there is an imbalance between the cases (e.g. not enough positive and/or negative instances of an anomaly are detected accurately), the criterion may be changed to other objective functions such as, F1 score, precision, recall, mean-squared error etc. for example. Where the pre-trained LLM model is being retrained as a multi-modal LLM that is able to produce real-text outputs, other objective functions that may be used are perplexity, ROUGE score, METEOR score etc. Additionally or as another alternative, additional random training or a different type of LLM architecture may be used if it is determined that the criterion is not met.

The accuracy function computes an accuracy of correct predictions by the pre-trained LLM and may take the following form, which is a fraction of correct predictions:

$$accuracy(y, \hat{y}) = \frac{1}{n_{samples}} \sum_{i=0}^{n_{samples}-1} 1(y_i = \hat{y}_i)$$

Where $\hat{y}_i$ is the predicted value of the $i$th sample, $y_i$ is the corresponding true value, $n_{samples}$ is the number of training data items and $1(x)$ is the indicator function.

Existing LLMs struggle with arithmetic and calculation mistakes due to a lack of algorithmic reasoning. By using multiple modalities of training data to refine an existing pre-trained LLM using fine-tuning, the refined LLM is able to accept direct numerical or tabular data and produce textual reasoning over it. This additional training of the LLM enhances the functionality and accuracy of the LLM. Moreover, LLMs which are trained using multi-modal training data are able to incorporate high dimensional and high diversity data types, thereby effectively providing human-readable textual explanations and reasoning from text and other forms of input data. As different modalities of the training data includes, but is not limited to, input such as text, numbers, video, audio, video etc., a LLM trained according to the technology disclosed herein is able to incorporate a wide variety to information about a certain type of event.

The training data which is used to train the LLM is typically a time series, i.e. data relating to something which changes over time. Where the data relates to a slowly changing variable, such as an inventory, the rate of change of the data is very low and may be regarded as a constant. As used herein, a time series may relate to continuous data which is captured, a variable which is observed at various intervals of time or a portion or all of the previous records of the variable.

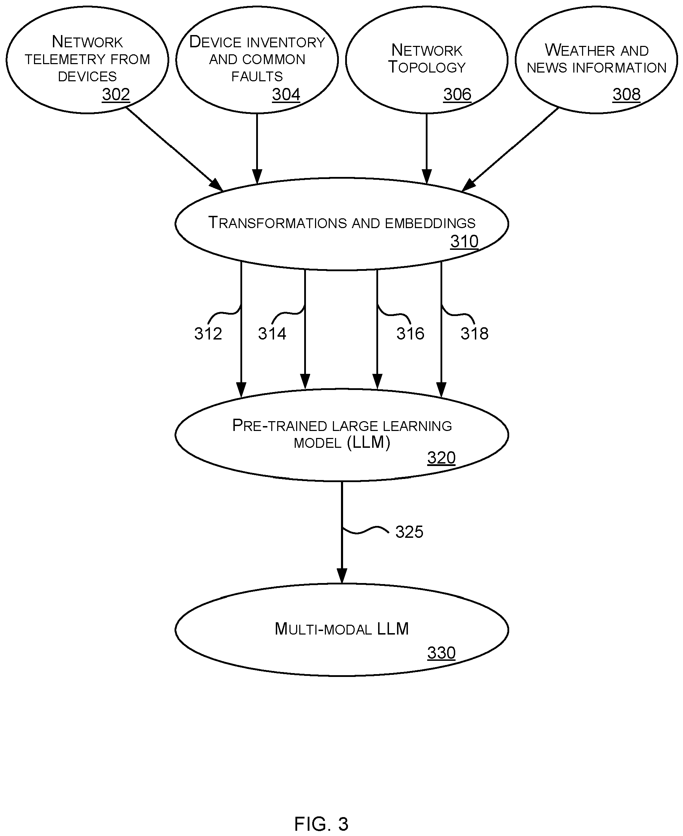

FIG. 3 illustrates a schematic overview of fine-tuning of a pre-trained large language model for use in anomaly detection in a communications network. As depicted in FIG. 3, there are four modalities of training data which are used to train the LLM to perform anomaly detection. However, in practice, there may be fewer or greater modalities of training data that are used to train the LLM. In FIG. 3, the modalities of training data which are used to train the LLM are network telemetry from devices 302 (which may be numerical), device inventory and common faults 304 (which may be text), network topology 306 (which may be a graph, e.g. vertices and edges, in a discrete mathematical interpretation) and weather and news information 308 (which may be text). Each modality of training data includes labelled data items which provide information regarding whether the given data item led to an anomaly or not. The labels are available since they were observed empirically i.e. they are from historical data. The modalities of training data are transformed to obtain vector embeddings 310 which are able to be processed by a pre-trained LLM 320. Training data is transformed at each time where data is input into the pre-trained LLM. Each modality of data (302, 304, 306, 308) has a respective transformation to obtain the vector embeddings (312, 314, 316, 318) Each vector embedding is a list of numbers. Each vector embedding may have an associated label such as a zero (indicating false, no anomaly) and one (indicating true, an anomaly is present). To transform text into a vector embedding an encoder is used such as Word2Vec or BERT. To transform an image into a vector an encoder is used such as CLIP. For each of the modalities there is an encoder to encode the data into an embedding vector and the encoders are configured to encode the data into the same multi-dimensional embedding space. As an example, to obtain vector embedding 312, the network telemetry from devices 302 training data is transformed using Word2Vec for textual parts of the telemetry data and no transformation for numeric parts of the telemetry data, to obtain vector embedding 314, the device inventory and common faults 304 training data is transformed using Word2Vec, to obtain vector embedding 316, the network topology 306 training data is transformed using a transformation which transforms a network graph into vector embeddings and to obtain vector embedding 318, the weather and news information 308 training data is transformed using Word2Vec. The example transformations described herein are non-limiting examples of transformations which may be used. Other transformations which convert the training data into vector embeddings processable by the pre-trained LLM may also be used with the technology disclosed herein. In some examples, the respective vector embeddings are concatenated into a single input which is input into the pre-trained LLM 320.

Using the labels from the modalities of training data (302, 304, 306, 308), the pre-trained LLM 320 is fine-tuned by updating the weights of the pre-trained LLM 320 using supervised or semi-supervised learning. The objective function used for the supervised or semi-supervised learning will depend on the way in which performance of the multi-modal LLM is being evaluated. That is, the objection function is used to assess the performed of the multi-modal LLM compared to labels provided during training. When a criterion 320 is met, the transfer learning of the pre-trained LLM 320 is complete and the pre-trained LLM is retrained as a multi-modal LLM 330 which is able to detect an anomaly in a communication network which may be caused by a plurality of different sources. The domain-specific transfer learning increases the modality of the LLM, enabling the model to incorporate a plurality of modalities in real-time.

Applying techniques from multi-modal LLMs to problems in network diagnostics can enable a more granular and informative view of the network that incorporates high-dimensional information which would otherwise not be possible using standard LLMs or single modal models.

Anomalies take many different forms. For example, an anomaly could be a physical fault in a communications network (such as a communications line being cut or a blockage), two systems not working together, problems with network capacity (such as a network running out of capacity), heating and/or cooling issues and the like. Anomalies may also be temporal in nature. For example, anomaly at an earlier instance in time may be less severe than if the anomaly were left undetected for a significant period of time.

Anomalies in a communication network can have significant effects on users of the network. Thus, it is of great importance to be able to identify, and resolve, the source of the anomaly as quickly as possible. Whilst anomalies may arise from a single type of fault or anomaly in a system, anomalies may also arise from a variety of different causes. For example, conditions which may lead to an anomaly include: an unforeseen holiday which leads to a spike of network activity at a usually quiet period, a broadband fault, a fault with a specific customer's network connection (e.g. a local issue) or a fault with the network connection for every user (e.g. a global issue).

Where a system displays a faulting condition, it is not always immediately clear what condition led to the occurrence of the fault. Not knowing what condition(s) caused the anomaly to occur leads to costly delays and potentially further degradation of the system. It is therefore advantageous to have a model which is able to process multiple modalities of data such that the model is able to cope with the complexity of situations which could lead to an anomaly. As anomalies are manifold and manifest themselves in different ways, by training a LLM to process multiple modalities of data, the multi-modal LLM processes is able to detect the root cause of an anomaly from a disparate set of data instead of being restricted to detecting anomalies from a single modality of data. As labels in the training data may comprise a description of one or more causes of the anomaly, during inference, the multi-modal LLM is able to output that an anomaly is detected as well as what a cause of the anomaly is. The disclosed technology therefore enables the detection of anomalies from a disparate data source whilst also being able to determine what faulting condition or conditions led to the anomaly.

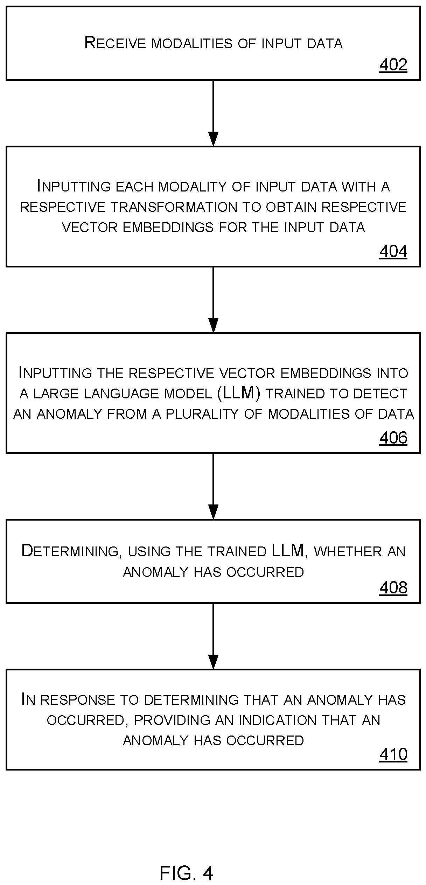

FIG. 4 is an exemplary method 400 of the use of a multi-modal LLM to perform anomaly detection. In FIG. 4, multiple modalities of input data are received 402. In an example, the input data is received by an existing system which monitors a system in which an anomaly could occur. For example, this may be an existing system which monitors a communications network to provide reporting and/or support analysis of the system. For each modality of input data, a respective transformation is used to transform 404 the input data to obtain respective vector embeddings for the input data. As described above in respect of the training data, vector embeddings are lists of numbers which are processable by an LLM. A respective transformation for each modality of input data is used to transform 404 the respective modalities of input data to obtain the vector embeddings. A respective transformation for one modality of data may be the same as, or may be different to, the transformation for another modality of data.

The determined vector embeddings are input 406 into a multi-modal LLM which has been trained (as described with reference to FIG. 3) to detect an anomaly from a plurality of modalities of input data. Using the trained multi-modal LLM, it is determined 408 whether an anomaly has occurred. In some examples, the multi-modal LLM determines that a system is not behaving anomalously. In other examples, the LLM determines that the system is behaving anomalously. In response to the multi-modal LLM determining that an anomaly has occurred, an indication that an anomaly has occurred, and/or is occurring, is provided 410 by the multi-modal LLM.

Using a multi-modal LLM in this way enables the multi-modal LLM to incorporate a plurality of modalities (such as network telemetry, information about network devices, network topology, network statistics, external information such as news and events, weather information etc.) in real-time. Such modalities are then used in, for example, operation centres to detect anomalies and provide reason over the anomalies in the network. The multi-modal LLM may have a plurality of, or a single, output, such as flagged anomalies, an identification as to the reason for which the anomaly occurred, a subsequent action to resolve the anomaly and/or update a training data inventory and/or labels with the detected anomaly.

Using the multi-modal LLM to detect an anomaly, the complexity and dimensions of inputs are condensed, enabling a faster time to resolve anomalies and process and use diverse information.

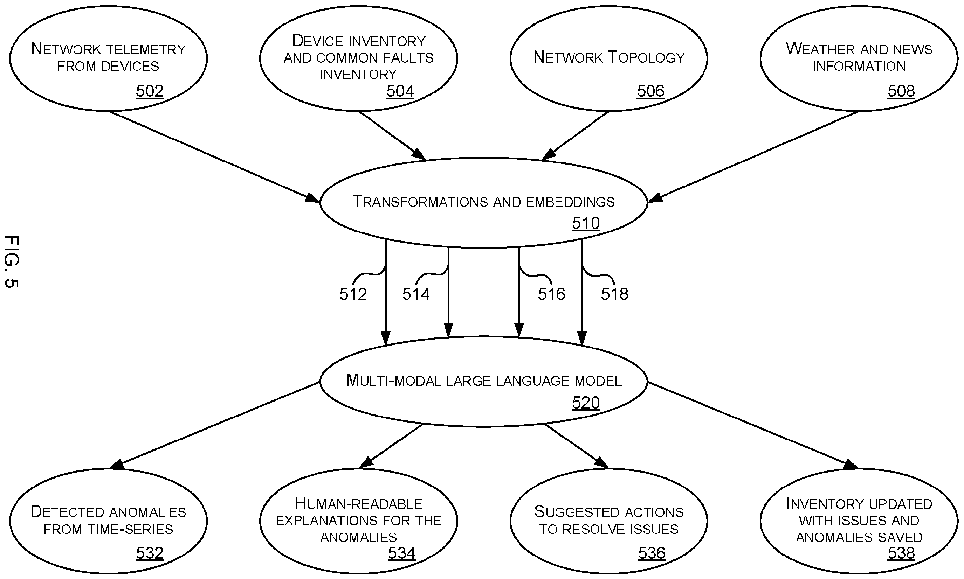

FIG. 5 illustrates a schematic overview of using a large language model for anomaly detection in a communication network. As depicted in FIG. 5, there are four modalities of input data which are input into the multi-modal LLM for anomaly detection. However, in practice, there may be fewer or greater modalities of data which are used in the detection of anomalies. The input data may be collected in real-time from e.g. one or more sensors or may be obtained from a database of information, e.g. an inventory.

In FIG. 5, the modalities of input data which are used by the multi-modal LLM are network telemetry from devices 502, device inventory and common faults inventory 504, network topology 506 and weather and news information 508. The modalities of input data (502, 504, 506 and 508) are transformed with respective transformations to obtain respective vector embeddings 510 which may be processed by the multi-modal LLM 520. Each modality of input data (502, 504, 506, 508) has a respective transformation to obtain the vector embeddings (512, 514, 516, 518). In some examples, a respective transformation for one modality of data will be the same as for another modality of data.

As an example, to obtain vector embedding 512, the network telemetry from devices 502 input data is transformed using a Word2Vec transformation, to obtain vector embedding 514, the device inventory and common faults inventory 504 input data is transformed using a Word2Vec transformation, to obtain vector embedding 516, the network topology 506 input data is transformed using a transformation which converts a network graph to a vector embedding and to obtain vector embedding 518, the weather and news information 508 input data is transformed using a Word2Vec transformation.

The vector embeddings are input into the multi-modal LLM 520, which has been retrained to detect an anomaly from a plurality of modalities of input. The multi-modal LLM 520 processes the vector embeddings to detect whether an anomaly has occurred. The output of the multi-modal LLM 520 may also comprise multiple modalities. For example, the multi-modal LLM 520 may output a plurality of outputs in response to detecting an anomaly. Such outputs include, but are not limited to, detected anomalies from a time-series 532, human-readable explanations for the detected anomaly 534, suggested actions to resolve the anomaly 535 and inventory updated with issues and anomalies saved 538. In some cases the outputs are used to trigger instructions to be sent to one or more nodes of the communications network from which the network telemetry was received in operation 502. The instructions enable automatic remediation of the anomaly by actions such as one or more of: isolation of a network node, rerouting of traffic, provisioning of a network node.

Input data for the multi-modal LLM may be obtained using one or more sensors such as equipment in the communications network that monitors telemetry data including but not limited to: round trip time, packet loss rate, jitter rate. The sensors comprise any means which may gather information relating to the performance of a network. For example, this includes telemetry gathered from network devices, external devices placed into the network to measure and record perform, environment sensors monitoring the working environment of one or more devices within the network, small software agents deployed on customer premise equipment to record metrics etc. This enables the multi-modal LLM to monitor various aspects of a communication network to determine anomalies or indications of an increased risk that an anomaly will occur in real-time. Monitoring both network data and external data (e.g. news and events information) in real-time leads to anomalies being anticipated and/or detected at a must faster rate than where single modality models are used.

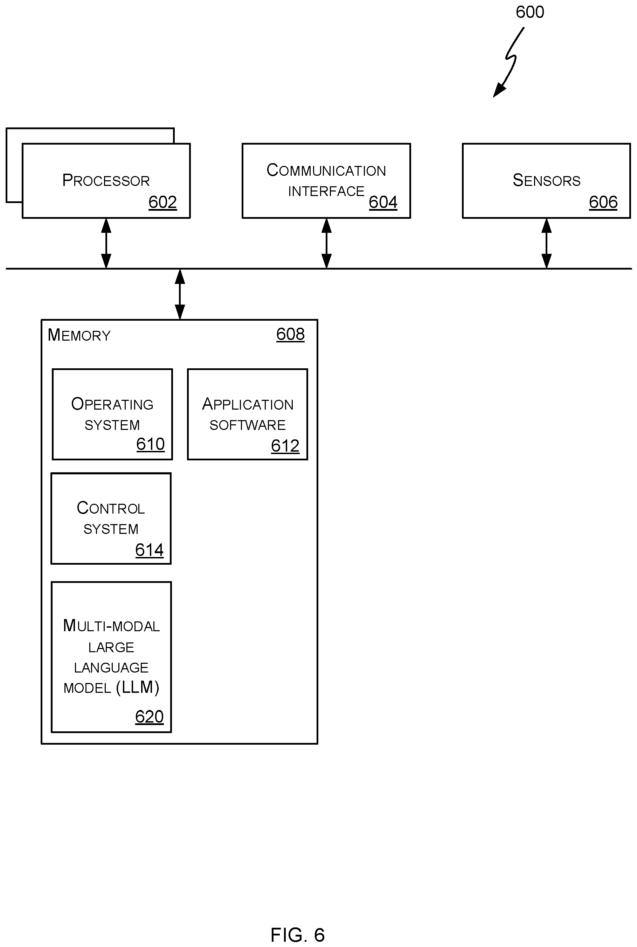

FIG. 6 illustrates various components of an example computing device 600 in which embodiments of the large language model (LLM) training and execution of the multi-modal LLM are implemented in some examples. The computing device is of any suitable form such as a compute node in a data centre, a cluster of compute nodes or a mobile computing device, where the technology is being used to fine-tune an LLM. Where the computing device is being used to execute the fine-tuned LLM the computing device may be a compute node in a data centre or an on-premise server.

The computing device 600 comprises one or more processors 602 which are microprocessors, controllers or any other suitable type of processors for processing computer executable instructions to control the operation of the device in order to perform the methods of figures 1 to 5. In some examples, for example where a system on a chip architecture is used, the processors 602 include one or more fixed function blocks (also referred to as accelerators) which implement a part of the method of figures 1 to 5 in hardware (rather than software or firmware). That is, the methods described herein are implemented in any one or more of software, firmware, hardware. The computing device has a memory holding multi-modal large language model 620. The computing device optionally comprises sensors 606. Platform software comprising an operating system 610 or any other suitable platform software is provided at the computing-based device to enable application software 612 to be executed on the device. Although the computer storage media (memory 608) is shown within the computing-based device 600 it will be appreciated that the storage is, in some examples, distributed or located remotely and accessed via a network or other communication link (e.g. using communication interface 604).

The computing-based device 600 also comprises an input/output controller 614 arranged to output display information to a display device which may be separate from or integral to the computing-based device 600. The display information may provide a graphical user interface. The input/output controller 614 is also arranged to receive and process input from one or more devices, such as a user input device (e.g. a mouse, keyboard, camera, microphone or other sensor). In some examples the user input device detects voice input, user gestures or other user actions. In an embodiment the display device also acts as the user input device if it is a touch sensitive display device. The input/output controller 614 outputs data to devices other than the display device in some examples.

Any reference to 'an' item refers to one or more of those items. The term 'comprising' is used herein to mean including the method blocks or elements identified, but that such blocks or elements do not comprise an exclusive list and an apparatus may contain additional blocks or elements and a method may contain additional operations or elements. Furthermore, the blocks, elements and operations are themselves not impliedly closed.

The steps of the methods described herein may be carried out in any suitable order, or simultaneously where appropriate. The arrows between boxes in the figures show one example sequence of method steps but are not intended to exclude other sequences or the performance of multiple steps in parallel. Additionally, individual blocks may be deleted from any of the methods without departing from the spirit and scope of the subject matter described herein. Aspects of any of the examples described above may be combined with aspects of any of the other examples described to form further examples without losing the effect sought. Where elements of the figures are shown connected by arrows, it will be appreciated that these arrows show just one example flow of communications (including data and control messages) between elements. The flow between elements may be in either direction or in both directions.

Where the description has explicitly disclosed in isolation some individual features, any apparent combination of two or more such features is considered also to be disclosed, to the extent that such features or combinations are apparent and capable of being carried out based on the present specification as a whole in the light of the common general knowledge of a person skilled in the art, irrespective of whether such features or combinations of features solve any problems disclosed herein. In view of the foregoing description it will be evident to a person skilled in the art that various modifications may be made within the scope of the invention.

## Claims

1. A computer-implemented method for training a large language model (LLM) to detect an anomaly, the method comprising:

receiving a plurality of modalities of training data, each modality of training data comprising a different data type, wherein the training data comprises labels indicating a presence of an anomaly;

transforming each modality of training data with a respective transformation to obtain respective vector embeddings;

inputting the respective vector embeddings of the training data into a pre-trained LLM; and

fine-tuning weights of the pre-trained LLM using the training data via supervised learning such that the pre-trained LLM is able to detect anomalies in multi modal data.

2. The method as claimed in claim 1, wherein the anomaly comprises a fault in a communications network.

3. The method as claimed in claim 1 or 2, wherein at least one of the plurality of modalities of input data comprise telemetry data of a communications network.

4. The method as claimed in any preceding claim, wherein at least one of the plurality of modalities of input data comprises image data.

5. The method as claimed in claim 4, wherein the image data is transformed into a vector embedding using a convolutional neural network (CNN).

6. The method as claimed in any preceding claim, wherein an objective function of the supervised learning comprises an accuracy objective for detecting the anomaly.

7. The method as claimed in any preceding claim, comprising using the fine-tuned LLM to detect an anomaly by receiving telemetry data from a communications network, transforming the input data into a vector embedding and processing the vector embedding using the fine-tuned LLM to obtain a classification of the input data, and in response to the classification indicating an anomaly, triggering instructions to do one or more of: automatically manage the communications network, automatically isolate a node of the communications network, automatically provision a node in the communications network, automatically provision a communications link of the communications network.

8. A computer-implemented method, the method comprising:

receiving a plurality of modalities of input data, each modality of input data comprising a different data type;

transforming each modality of input data with a respective transformation to obtain respective vector embeddings for the input data;

inputting the respective vector embeddings into a large language model (LLM) trained to detect an anomaly from a plurality of modalities of data;

determining, using the trained LLM, whether an anomaly has occurred; and

in response to determining that an anomaly has occurred, providing an indication that an anomaly has occurred.

9. The method as claimed in claim 8, wherein the anomaly comprises a fault in a communications network.

10. The method as claimed in claims 8 or 9, wherein one of the plurality of modalities of input data comprises network telemetry data.

11. The method as claimed in any of claims 8 to 10, wherein the indication that an anomaly has occurred comprises human-readable textual explanation and/or reasoning.

12. The method as claimed in any of claims 8 to 11, wherein at least one of the plurality of modalities of input data is received from a sensor associated with a communications network.

13. The method as claimed in any of claims 8 to 12, further comprising:

in response to determining that an anomaly has occurred, providing a suggested action to resolve the anomaly.

14. An apparatus comprising:

one or more processors; and

a memory that stores one or more programs configured to perform a method according to any one of claims 8 to 13.

**15.** The apparatus as claimed in claim 14, further comprising:
a sensor, wherein at least one of the plurality of modalities of input data comprises sensor data from the sensor.

FIG. 1

<u>200</u>

RECEIVE MULTIPLE MODALITIES OF
LABELLED TRAINING DATA
<u>202</u>

TRANSFORMING EACH MODALITY OF TRAINING
DATA WITH RESPECTIVE TRANSFORMATIONS TO
OBTAIN RESPECTIVE VECTOR EMBEDDINGS
<u>204</u>

INPUTTING THE RESPECTIVE VECTOR
EMBEDDINGS OF THE TRAINING DATA
INTO A PRE-TRAINED LARGE LANGUAGE MODEL
(LLM)  <u>206</u>

FINE-TUNING WEIGHTS OF THE PRE-TRAINED
LLM USING THE TRAINING DATA VIA SUPERVISED
LEARNING
<u>208</u>

WEIGHTS OF PRE-TRAINED LLM
CHANGE BY DE MINIMIS AMOUNT?
<u>210</u>

NO

PERFORM ADDITIONAL
TRAINING
<u>214</u>

YES

TRAINING OF LLM COMPLETE
<u>212</u>

FIG. 2

NETWORK TELEMETRY FROM DEVICES
302

DEVICE INVENTORY AND COMMON FAULTS
304

NETWORK TOPOLOGY
306

WEATHER AND NEWS INFORMATION
308

TRANSFORMATIONS AND EMBEDDINGS
310

312   314   316   318

PRE-TRAINED LARGE LEARNING MODEL (LLM)
320

325

MULTI-MODAL LLM
330

FIG. 3

RECEIVE MODALITIES OF INPUT DATA

402

INPUTTING EACH MODALITY OF INPUT DATA WITH A
RESPECTIVE TRANSFORMATION TO OBTAIN RESPECTIVE
VECTOR EMBEDDINGS FOR THE INPUT DATA

404

INPUTTING THE RESPECTIVE VECTOR EMBEDDINGS INTO
A LARGE LANGUAGE MODEL (LLM) TRAINED TO DETECT
AN ANOMALY FROM A PLURALITY OF MODALITIES OF DATA

406

DETERMINING, USING THE TRAINED LLM, WHETHER AN
ANOMALY HAS OCCURRED

408

IN RESPONSE TO DETERMINING THAT AN ANOMALY HAS
OCCURRED, PROVIDING AN INDICATION THAT AN
ANOMALY HAS OCCURRED

410

FIG. 4

FIG. 5

600

PROCESSOR
602

COMMUNICATION
INTERFACE 604

SENSORS
606

MEMORY 608

OPERATING
SYSTEM
610

APPLICATION
SOFTWARE
612

CONTROL
SYSTEM
614

MULTI-MODAL
LARGE
LANGUAGE
MODEL (LLM)
620

FIG. 6

Europäisches Patentamt

European Patent Office

Office européen des brevets

# EUROPEAN SEARCH REPORT

**Application Number**

EP 24 16 3671

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 11 924 027 B1 (MYSORE VISHAL [US] ET AL) 5 March 2024 (2024-03-05) <br> * column 7, lines 7-41 * <br> * column 10, lines 40-47 * <br> * column 12, lines 43-52 * <br> * column 17, line 36 - column 18, line 63 * <br> ----- | 1-15 | INV. <br> G06F11/30 <br> G06N3/09 <br> H04L41/06 <br> H04L41/16 |
| X | US 11 929 963 B1 (ZHENG PEI [US]) 12 March 2024 (2024-03-12) <br> * column 7, line 46 - column 10, line 10; figures 2,3 * <br> ----- | 1-15 | |

**TECHNICAL FIELDS SEARCHED (IPC)**

G06F
H04L
G06N

The present search report has been drawn up for all claims

| Place of search | Date of completion of the search | Examiner |
|---|---|---|
| The Hague | 24 August 2024 | Bykowski, Artur |

EPO FORM 1503 03.82 (P04C01)

## ANNEX TO THE EUROPEAN SEARCH REPORT
## ON EUROPEAN PATENT APPLICATION NO.

EP 24 16 3671

This annex lists the patent family members relating to the patent documents cited in  the above-mentioned European search report.
The members are as contained in the European Patent Office EDP file on
The European Patent Office is in no way liable for these particulars which are merely given for the purpose of information.

24-08-2024

| Patent document cited in search report | | Publication date | Patent family member(s) | Publication date |
|---|---|---|---|---|
| US 11924027 | B1 | 05-03-2024 | NONE | |
| US 11929963 | B1 | 12-03-2024 | NONE | |

EPO FORM P0459

For more details about this annex : see Official Journal of the European Patent Office, No. 12/82